# EUROPEAN PATENT APPLICATION

(11) **EP 2 710 871 A2**
(43) Date of publication of application: **26.03.2014**
(21) Application number: 13184691.7
(22) Date of filing: 17.09.2013
(51) Int. Cl.: A01B 73/04, A01B 73/06, A01C 23/02, A01C 5/06

(54) **Agricultural machine for applying manure to land**

(30) Priority: 24.09.2012 DK 201200582
(71) Applicant: Sørensen, Harry Højvang, 6818 Årre (DK)
(72) Inventor: Sørensen, Harry Højvang, 6818 Årre (DK)
(74) Representative: Kristensen, Martin Hjelm

(57) **Abstract**

The invention specifies an agricultural machine (100) for delivery and injecting of manure, where the agricultural machine in an unfolded configuration in the orientation intended for use in a working situation comprises:
- a support frame (2), where the support frame comprises a first side (4) and a second side (6); and where the support frame comprises a front part (8) and a rear part (10), the frame thereby defining a longitudinal direction X between the front part and the rear part; and a transverse direction Y, which is oriented perpendicular to the longitudinal direction;
- a tilting frame (12), which comprises a first side (14), a second side (16), a front end (18) and a rear part (20);
- a first set of projections (30) comprising two primary projections (30', 30"); where each primary projection extends from a first end (32) to a second end (34) of the primary projection in a transverse direction from each side (14, 16) of the tilting frame;
- a second set of projections (40) comprising two secondary projections (40', 40"), each secondary projection extending from a first end (42) to a second end (44) of the secondary projection in a transverse direction from the second end (34) of each primary projection;
- a set of injecting tools (50) comprising two injecting tools (50', 50"), each injecting tool having a longest dimension in a transverse direction;

where the tilting frame (12), each primary projection (30',30"), each secondary projection (40',40") and each injecting tool (50',50") is rotationally mounted in a pivot, which makes it possible to configure the agricultural machine between various working configurations and a transport configuration.

## Description

### Field of the invention

The present invention concerns in its first aspect an agricultural machine in the form of an unfolding injector for delivery and injecting of manure. In a second aspect, the present invention concerns the application of such an agricultural machine in the delivery and injecting of manure. A third aspect of the present invention concerns a method of delivery and injecting of manure.

### Background of the invention

In the delivery and spreading of manure on a field it is important to the farmer that the delivery and the spreading can be done quickly and effectively.

Since manure contains ammonia, which can cause odor nuisances in the surrounding area, it is furthermore important to minimize the evaporation of ammonia in the delivery and spreading of manure.

This evaporation of ammonia can be minimized by ensuring that the manure is not just laid down or spread over the ground, but rather injected into the ground.

For this purpose, so-called manure injectors have been developed. A manure injector usually comprises a wagon, which is pulled behind a motor vehicle, such as a tractor. On the wagons there is a pair of projections, which can be tilted out prior to use so that a satisfactory and effective working width is achieved for the delivery of manure. On each projection is arranged an injection tool, usually comprising a number of wheels, which are arranged in series such that the series of wheels is oriented in a transverse direction relative to the driving direction. Behind the series of wheels there is usually arranged a series of furrowing blades, which when moved over the ground will cut a furrow in the ground. Finally, a typical manure injector comprises a series of injecting pipes, which are designed to direct the manure into the furrows made in the ground by the furrowing blades as they are driven across the ground.

Such a manure injector not only provides reduced odor nuisance from evaporation of ammonia, but also a more effective utilization of the nutrient value of the manure.

In the design of a manure injector, one has to balance several diametrically opposite considerations.

On the one hand, one wishes to make it possible for the farmer to inject manure to the broadest possible extent, so that the farmer will save time in the delivery and injecting of manure on the fields and can furthermore minimize the volume of driving ruts, which in themselves constitute a waste, since a driving rut represents unutilized field area. On the other hand, the presence of furrowing blades engaging with the ground, since they cut furrows into the ground as they are driven with the injector over the ground, exerts a sizeable backward force. The longer the projection of the manure injector, the greater the forces acting on the projections due to these furrowing blades. The magnitude of these forces thus places great demands on the design quality of the manure injector. At the same time, the injector must be designed so as to enable both delivery of manure in a satisfactory broad injection track on the ground in a working configuration, but also easy converting of the manure injector into a transport configuration where the user can transport the manure injector on public roads.

EP 2 116 123 A1 describes a manure injector that comprises three frames that are mounted on a chassis comprising a series of wheels and carrying a manure tank, such that the chassis can be pulled behind a tractor. The injecting tools are mounted on three frames. A first frame 1 is mounted at the back of the chassis, while this first frame can be raised and lowered between a transport situation and a working situation. A second frame 3 can turn about a horizontal axle between a working configuration and a transport configuration. In a transport configuration, this second frame 3 is oriented vertically. In a working configuration, this second frame 3 is oriented horizontally along the ground. A third frame 5 is mounted at the side of the chassis, and this third frame 5 can be turned about a vertical axis between a working configuration and a transport configuration. In a transport configuration, this third frame 5 is oriented vertically along the side of the chassis and in a working configuration this third frame 5 is oriented horizontally along the ground.

Although this manure injector provides the possibility of a very broad injection track for manure and a converting from a working configuration to a transport configuration, the manure injector according to EP 2 116 123 A1 is relatively fragile in cases when the injector is to be used for injecting manure by use of furrowing blades, since these furrowing blades as mentioned above exert a considerable backward force on the respective frames. In particular, the third frame 5 will be subjected to loads exerted by the resistance of the ground, inasmuch as this frame is suspended rotationally about a vertical axis. The vertically oriented suspension of the third frame 5 will thus not contribute to the design strength in the injector according to EP 2 116 123 A1, which means that the third frame 5 will only achieve its structural integrity with the rest of the injector via the hydraulic cylinder 19.

Thus, there exists a need for a manure injector that on the one hand provides for the possibility of injecting manure in very broad injecting track in a working configuration, and also easily enables a converting from this working configuration into a transport configuration, where the manure injector in a working configuration has improved structural strength.

### Brief description of the invention

These needs are met according to the present invention, which in a first aspect indicates:
An agricultural machine for delivery and injecting of manure, where the agricultural machine in an unfolded configuration in the orientation intended for use in a working situation comprises:
   - a support frame, where the support frame comprises a first side and a second side; and where the support frame comprises a front part and a rear part, the frame thereby defining a longitudinal direction X between the front part and the rear part; and a transverse direction Y, which is oriented perpendicular to the longitudinal direction;
   - a tilting frame, which comprises a first side, a second side, a front end and a rear part;
   - a first set of projections comprising two primary projections; where each primary projection extends from a first end to a second end of the primary projection in a transverse direction from each side of the tilting frame;
   - a second set of projections comprising two secondary projections, each secondary projection extending from a first end to a second end of the secondary projection in a transverse direction from the second end of each primary projection;
   - a set of injecting tools comprising two injecting tools, each injecting tool having a longest dimension in a transverse direction;
characterized in that the tilting frame at its front end is rotationally mounted in a first pivot at the rear part of the support frame, while the tilting frame can turn about an essentially horizontal axis, which is essentially parallel to the transverse direction;
where each primary projection at its first end is rotationally mounted in a second pivot arranged on either side of the tilting frame, each primary projection being able to turn about an essentially horizontal axis, which is essentially parallel to the longitudinal direction of the support frame;
where each secondary projection at its first end is rotationally mounted in a third pivot arranged on each primary projection at the second end of this primary projection, while each secondary projection can turn about an essentially horizontal axis, which is essentially parallel to the longitudinal direction of the support frame;
where each injecting tool is rotationally mounted in a fourth pivot at the second end of a secondary projection, each injecting tool being able to turn about an essentially horizontal axis, which is essentially parallel to the longitudinal direction of the support frame.

In a second aspect the present invention specifies an application of an agricultural machine according to the first aspect of the invention for an agricultural purpose.

In a third aspect the present invention specifies a method for injecting of manure, comprising the following steps:
i) providing of an agricultural machine according to the first aspect of the invention, which is placed in an unfolded configuration;
ii) defining of a driving track on an area of ground where one wishes to inject manure, the driving track having a dimension in a transverse direction, as compared to the driving direction, corresponding to the combined dimension, (2 x L), in a transverse direction, of the two injecting tools;
iii) driving of the agricultural machine provided in step i) across the driving track defined in step ii) while at the same time injecting manure;
iv) changing of the configuration of the agricultural machine (100) to a semi-unfolded configuration;
v) driving the agricultural machine (100) in the configuration defined in step iv) across the driving track defined in step ii) while injecting manure at the same time.

With the agricultural machine according to the first aspect of the invention one has the possibility of injecting manure onto a field in a broad injecting track with minimal use of field area for driving ruts of the agricultural machine and the vehicle pulling the agricultural machine, since the agricultural machine as explained below can be set in a fully unfolded configuration, where it can inject manure into two opposite outer lanes in relation to the agricultural machine, after which the agricultural machine can be changed to a semi-unfolded configuration in which one can drive over the same driving rut and inject manure into the area corresponding to the area between the first outer opposite lanes that were injected. It is estimated that this option of changing the configuration can save the farmer 7.5 to 15% in crop damage from the vehicle, since with the agricultural machine according to the first aspect of the invention one can use the same driving rut for injecting of manure over a greater swath than was possible heretofore.

At the same time, the agricultural machine according to the first aspect of the invention enables an easy and quick changing of the configuration from a working configuration (fully unfolded or semi-unfolded configuration) to a transport configuration where the agricultural machine has so slight a dimension in the transverse direction that is can be transported lawfully on public roads.

Although the agricultural machine according to the first aspect of the invention enables the injecting of manure in a very broad swath per area of driving rut, the agricultural machine according to the first aspect of the invention is exceptionally durable in regard to the backward forces that the ground exerts on the injecting tools due to the engagement of the injection elements with the ground.

This is due to the fact that the agricultural machine is designed such that the elements which can swivel out to achieve a broad injecting swath and that are subject to torsion forces due to engagement with the ground are all suspended in a pivot that defines an essentially horizontally oriented axis of rotation.

A horizontally oriented axis of rotation will provide such elements with a much greater durability in regard to torsion forces in the horizontal plane than a corresponding element that is suspended in a vertically oriented pivot, such as the one known from EP 2 116 123 A1.

As compared to traditional agricultural machines of the same kind, the agricultural machine according to the first aspect of the invention has the further advantage that the towing force needed for movement of the agricultural machine across a field in a working situation is cut in half, due to the circumstance that the agricultural machine is driven twice through the same driving rut during use; each time with only half the combined working swath for the portion of the agricultural machine that is engaging with the ground.

### Brief description of figures

Fig. 1 shows in perspective view an agricultural machine according to the first aspect of the invention in a fully unfolded working configuration.
Fig. 2 shows, in side view, an agricultural machine according to the first aspect of the invention in a semi-unfolded working configuration.
Fig. 3 shows the agricultural machine of Fig. 2, seen from the rear.
Fig. 4 shows in perspective view an agricultural machine according to the first aspect of the invention in a semi-unfolded working configuration.
Fig. 5 shows the agricultural machine of Fig. 2, in top view.
Fig. 6 shows in perspective view the agricultural machine of Fig. 2 configured in a transport configuration.

### Detailed specification of the invention

### First aspect of the invention

As mentioned above, the present invention in its first aspect specifies an agricultural machine for delivery and injecting of manure, where the agricultural machine in an unfolded configuration in the orientation intended for use in a working situation comprises:
- a support frame, where the support frame comprises a first side and a second side; and where the support frame comprises a front part and a rear part, the frame thereby defining a longitudinal direction X between the front part and the rear part; and a transverse direction Y, which is oriented perpendicular to the longitudinal direction;
- a tilting frame, which comprises a first side, a second side, a front end and a rear part;
- a first set of projections comprising two primary projections; where each primary projection extends from a first end to a second end of the primary projection in a transverse direction from each side of the tilting frame;
- a second set of projections comprising two secondary projections, each secondary projection extending from a first end to a second end of the secondary projection in a transverse direction from the second end of each primary projection;
- a set of injecting tools comprising two injecting tools, each injecting tool having a longest dimension in a transverse direction;
characterized in that the tilting frame at its front end is rotationally mounted in a first pivot at the rear part of the support frame, while the tilting frame can turn about an essentially horizontal axis, which is essentially parallel to the transverse direction;
where each primary projection at its first end is rotationally mounted in a second pivot arranged on either side of the tilting frame, each primary projection being able to turn about an essentially horizontal axis, which is essentially parallel to the longitudinal direction of the support frame;
where each secondary projection at its first end is rotationally mounted in a third pivot arranged on each primary projection at the second end of this primary projection, while each secondary projection can turn about an essentially horizontal axis, which is essentially parallel to the longitudinal direction of the support frame;
where each injecting tool is rotationally mounted in a fourth pivot at the second end of a secondary projection, each injecting tool being able to turn about an essentially horizontal axis, which is essentially parallel to the longitudinal direction of the support frame.

The agricultural machine according to the first aspect of the invention thus comprises a support frame that has two sides. The support frame comprises at the rear a tilting frame, which can swivel about a first pivot from a vertically oriented configuration to a horizontally oriented configuration. At either side of the tilting frame is secured, and able to turn via a second pivot, a primary projection, which at its other end is secured to a secondary projection and able to turn about a third pivot. The opposite end of this secondary projection is secured to an injecting tool and able to turn about a fourth pivot.

Thanks to the first, the second, the third and the fourth pivot, it is possible as explained below to change the configuration of the agricultural machine from a fully unfolded working configuration, where the respective injecting tools are arranged outermost on the unfolded agricultural machine, to a semi-unfolded working configuration, where the respective injecting tools are arranged immediately at left or right of the center of the support frame (seen in a longitudinal direction).

In this way, with the agricultural machine according to the first aspect of the invention one can utilize the same driving rut in relation to the crops to first inject manure with the agricultural machine in a fully unfolded working configuration in an area on either side of the driving rut, and situated a ways outside of the driving rut, and then change the configuration of the agricultural machine to a semi-unfolded configuration and thereby utilize the same driving rut to inject manure in the area situated between the two areas where manure was first injected.

In the present specification and the enclosed patent claims, the term *"longitudinal direction"* shall be understood as the direction defined by the lengthwise axis of the support frame, and which in a working situation during straight travel is understood to be the driving direction. Since the agricultural machine is essentially symmetrical about a center axis, *"a longitudinal direction"* is also defined by this axis of symmetry.

Accordingly, the term *"transverse direction"* in the present specification and the enclosed patent claims shall be understood as a horizontal direction which is essentially perpendicular to the longitudinal direction.

The term *"corresponding"* in the present specification and in the enclosed patent claims when referring to mutual relations between, e.g., secondary projection, primary projection and injecting tool, shall be understood to refer to the element (secondary projection, primary projection, and injecting tool) that is arranged on the same side of the support frame.

In one embodiment of the agricultural machine according to the first aspect of the invention, each injecting tool comprises:
- a number of wheels arranged in a series, the wheels having essentially a common axis of rotation, and this axis of rotation is oriented in a transverse direction;
- a number of rounded furrowing blades arranged in a series, the furrowing blades having essentially a common axis of rotation, and this axis of rotation is oriented in a transverse direction, and each furrowing blade comprises a rounded plate comprising at least at its periphery a curved trajectory, such that the series of furrowing blades seen in relation to a forward direction of travel is arranged behind the series of wheels;
- a number of injecting elements arranged in a series and designed to introduce manure into a furrow in the ground; the series of injecting elements being arranged in a transverse direction and the series of injecting elements, seen in relation to a forward direction of travel, is arranged behind the series of furrowing blades;
- means of distributing manure from a central supply line to each injecting element.

By providing the injecting tool with wheels, each projection is supported on the ground so that less stress is exerted on the mechanical structure of the agricultural machine. The furrowing blades mean that the manure can be "poured" in the ground (in the furrows created) via the injecting elements rather than simply be placed on the top of the ground. This accomplishes less evaporation of ammonia and increased utilization of nutrients in the manure. This configuration of an injecting tool is already known in itself.

By using rounded plates as the furrowing blades, one achieves a satisfactory furrowing with a resulting minimal resistance in the ground.

In one embodiment of the agricultural machine according to the first aspect of the invention, the number of injecting elements corresponds to the number of furrowing blades with regard to each injecting tool.

In this way it is possible for each injecting element to pour the manure into a furrow in the ground, produced by the corresponding furrowing blade, rather than pour the manure on top of the ground. This gives better utilization of the manure and reduced evaporation of ammonia.

By the term "injecting element" is meant in the present specification and in the enclosed claims a device that is suitable for introducing manure into a furrow in the ground. Such injecting elements can be in the form of: injecting pipes, injecting teeth, disk harrows, shoes, etc.

In one embodiment of the agricultural machine according to the first aspect of the invention, the series of wheels of the injecting tool is driven by a motor, such as a hydraulic motor or an electric motor.

By having the series of wheels driven by a motor, the backward force exerted on the agricultural machine is reduced, improving the mechanical integrity of the agricultural machine.

In one embodiment of the agricultural machine according to the first aspect of the invention, the wheels in each injecting tool comprise means of mechanical coupling to the rear furrowing blades such that a rotational movement of a wheel entrains a corresponding rotational movement of a rear furrowing blade such that a given rotational speed of the wheel entrains a lower rotational speed for the rear furrowing blade.

This embodiment, due to the fact that the furrowing blades are configured as a rounded plate having at least at its periphery a curved trajectory, means that the movement of the furrowing blade through the ground is more in the nature of a cutting through the ground, rather than a "plowing" through the ground, resulting in a better furrow. Moreover, the resistance through the ground is reduced in this way.

In this embodiment, it is preferable for the means of mechanical coupling between a furrowing blade and a wheel located in front of it be designed such that the rotational speed of the furrowing blade is 25 - 80%, such as 30 - 75%, for example 35 - 70%, such as 40 - 65%, for example 45 - 60%, such as 50 - 55% of the rotational speed of the wheel located in front.

These values for the relative speed of rotation between wheel and rear furrowing blade have proved to produce furrows of excellent size and quality for the intended purpose; namely, to inject manure therein.

In one embodiment of the agricultural machine according to the first aspect of the invention, the agricultural machine comprises one or more stabilizer rods and/or slanted braces, which are arranged between the support frame and each of the primary projections; and optionally also stabilizer rods that are arranged between the support frame and each of the secondary projections.

In a preferred embodiment, one or more of the stabilizer rods and/or slanted braces (82) each comprise one or more flexible couplings.

These embodiments can provide increased strength and mechanical integrity to the agricultural machine.

It is preferable for one or more of the stabilizer rods to each comprise one or more flexible manure supply lines.

In this way, one can easily take manure from a point on the support frame to a rearmost part of the agricultural machine.

In one embodiment of the agricultural machine according to the first aspect of the invention, the support frame comprises two or more wheels, at least two wheels having a common axis of rotation, the axis of rotation being oriented in a transverse direction.

The provision of wheels on the support frame enables easy movement and pulling of the agricultural machine behind a vehicle, such as a tractor.

Moreover, it is preferable to provide the front part of the support frame with a towing device, enabling easy coupling to a vehicle.

In one embodiment of the agricultural machine according to the first aspect of the invention, each injecting tool is rotationally mounted at the second end of the corresponding secondary projection in a position corresponding to the approximate midpoint of the transverse dimension of this injecting tool.

In one embodiment of the agricultural machine according to the first aspect of the invention, the mutual dimensions of each primary projection, each secondary projection, and each injecting tool are respectively defined such that if the dimension of each injecting tool in a transverse direction has the magnitude L, then the dimension of each primary projection in a transverse direction has essentially the magnitude L; and furthermore, the dimension of each secondary projection in a transverse direction has essentially the magnitude ½ L.

It is preferable for L to be 4.0 - 8.5 m, such as 4.5 - 8.0 m, for example 5.0 - 7.5 m, such as 5.5 - 7.0 m for example 6.0 - 6.5 m.

These embodiments are especially useful when the agricultural machine is intended to be used in a semi-unfolded configuration, as explained below. Having each injecting tool rotationally mounted on the second end of the corresponding secondary projection at a position corresponding to the approximate midpoint of the transverse dimension of this injecting tool, and having the transverse dimension of the primary projection correspond essentially to the transverse dimension of the injecting tool, which in turn is around twice the size of the transverse dimension of the secondary projection, means that at the agricultural machine can be brought into a semi-unfolded configuration, where the two injecting tools essentially lie one behind the other in a middle position of a transverse axis of the agricultural machine. In this way, one can inject manure in a central region around the driving rut itself.

The above indicated dimensions for the individual elements have proven to provide a fine balance between, on the one hand, an effective and sufficient swath for injecting manure, and on the other hand not having the weight of the agricultural machine become too large, as this would jeopardize the mechanical integrity.

In one embodiment of the agricultural machine according to the first aspect of the invention, the agricultural machine is adapted to be placed in a semi-unfolded configuration, where:
- each secondary projection is arranged beneath the corresponding primary projection such that each secondary projection is essentially oriented parallel to this corresponding primary projection, and each secondary projection is swiveled in beneath the corresponding primary projection by rotating about the third pivot; and where
- each injecting tool is arranged beneath the corresponding secondary projection such that each injecting tool is essentially oriented parallel to this corresponding secondary projection, and each injecting tool is swiveled in beneath the corresponding secondary projection by rotating about the fourth pivot.

As mentioned above, this configuration is useful when one wants to inject manure into an area of the field lying symmetrically and immediately around the driving rut of the agricultural machine.

When the agricultural machine is to be brought into such a semi-unfolded configuration, the tilting frame is swiveled up a bit around the first pivot. After this, each injecting tool and each secondary projection can be moved in relation to each other by rotating about the third and the fourth pivot, respectively, so that each injecting tool is essentially oriented in parallel with the corresponding secondary projection, which in turn is essentially oriented in parallel with the corresponding primary projection. After this, the tilting frame can be swiveled down again into the essentially horizontal orientation.

In one embodiment of the agricultural machine according to the first aspect of the invention, the agricultural machine is adapted to be brought into a transport configuration, where:
- the tilting frame is vertically oriented; and where
- each primary projection is essentially oriented in parallel with the corresponding secondary projection and with the corresponding injecting tool, and each secondary projection is thus arranged overlapping between the corresponding primary projection and the corresponding injecting tool; and where
- each primary projection is oriented essentially in a longitudinal direction.

This configuration is useful when the agricultural machine is going to be transported on the public roads. The transport configuration is achieved when the agricultural machine is in a semi-unfolded configuration by rotating the tilting frame about the first pivot so that the tilting frame is brought into a vertical orientation. After this, the respective projections with corresponding injecting tools are brought into a longitudinal orientation by rotating these parts via rotation of the primary projections about the second pivot. After this, the agricultural machine is in a transport configuration.

In one embodiment of the agricultural machine according to this embodiment, the agricultural machine comprises means for automatically:
- rotating the tilting frame about the first pivot; and/or
- rotating one or two primary projections about the second pivot, and/or
- rotating one or two secondary projections about the third pivot, and/or
- rotating one or two injecting tools about the fourth pivot.

Such means for automatic provision of rotation can comprise hydraulic or electric motors.

An automatic rotation about the various pivots will ease the manual labor of the farmer.

Moreover, it is preferable for the agricultural machine to also comprise means of locking the respective pivots in the individual configurations described above.

In one embodiment of the agricultural machine according to the first aspect of the invention, the agricultural machine comprises means for raising and lowering the driving wheels in relation to the support frame.

In this embodiment, it is preferable for the means for raising and lowering the wheels to comprise hydraulic or electric motors.

Since the driving wheels can be raised and lowered in relation to the support frame, the unfolding and folding up of the projections when the agricultural machine is brought from a transport configuration to a working configuration is easier. This will be explained more closely below under the third aspect of the invention.

Moreover, it is advantageous that the agricultural machine comprises sensors which can register the position of one or more of the moving parts, such as primary projection, secondary projection, tilting frame, injecting tool, in relation to the parts to which these moving parts are secured. It is furthermore advantageous for such sensors to be connected to an interface, which is also connected to the hydraulic/electric motors which control the movement of such moving parts. In this way, one can achieve an automation of the unfolding and folding of the moving parts, such as the primary projection, the secondary projection, the tilting frame, and the injecting tools.

The electric and/or hydraulic motors can be driven by an internal combustion engine, such as a Diesel or gasoline motor, optionally containing a generator.

The agricultural machine can comprise means for wireless operation of the electric and/or hydraulic functions of the machine.

### Second aspect of the invention

In a second aspect the present invention specifies an application of an agricultural machine according to the first aspect of the invention for an agricultural purpose.

In one embodiment of the second aspect of the invention, the agricultural purpose is the injecting of manure into the ground.

### Third aspect of the invention

The present invention in a third aspect specifies a method for injecting of manure, comprising the following steps:
i) providing an agricultural machine according to the first aspect of the invention, where the agricultural machine is placed in an unfolded configuration;
ii) defining of a driving track on an area of ground where one wishes to inject manure, the driving track having a dimension in a transverse direction, as compared to the driving direction, corresponding to the combined dimension, in a transverse direction, of the two injecting tools;
iii) driving of the agricultural machine provided in step i) across the driving track defined in step ii) while at the same time injecting manure;
iv) changing of the configuration of the agricultural machine to a semi-unfolded configuration, such as is defined above in the description of the first aspect of the invention;
v) driving the agricultural machine in the configuration defined in step iv) across the driving track defined in step ii) while injecting manure at the same time.

The method can also be carried out by commencing with the spreading of manure with the agricultural machine in a semi-unfolded configuration, and then driving over the same driving track with the agricultural machine in a fully unfolded configuration. The only drawback to this is that one will have to drive on top of a driving track in which one has just injected manure.

In a preferred embodiment of the method according to the third aspect of the invention, the agricultural machine prior to step iii) is brought from a transport configuration to an unfolded configuration by:
a) total or partial unfolding of each of the primary projections;
b) raising of the driving wheels so one or more of the wheels on the injecting tools rests on the ground;
c) forward movement of the agricultural machine followed by backward movement, these movements forcing the secondary projection, the injecting tools, and possibly also the primary projection to be unfolded, if these are not already fully unfolded;
d) swinging of the tilting frame down into a horizontally oriented position.

In a preferred embodiment of the method according to the third aspect of the invention, the agricultural machine after discharging the manure is brought into a transport configuration by:
a) tilting of the tilting frame to a vertically oriented position.
b) forward movement of the agricultural machine followed by backward movement, these movements forcing the injecting tools, the primary projections, and the secondary projections to fold up fully or partly;
c) lowering of the driving wheels so that one or more of the wheels on the injecting tools are lifted from the ground;
d) folding up of each of the primary projections.

These embodiments are advantageous, for by raising and lowering the driving wheels in relation to the support frame during the unfolding and folding process one uses the forward or backward movement of the agricultural machine itself to assist in this unfolding and folding. This eases the labor and reduces the stress on the machine.

The invention is explained below with reference to the enclosed figures. It should be noted that the enclosed figures only illustrate nonlimiting embodiments, and a series of other embodiments will be possible within the scope of the present invention.

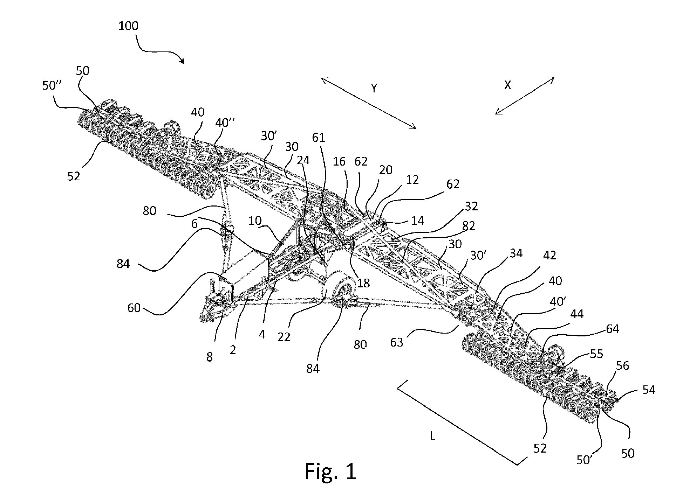

Fig. 1 shows an agricultural machine 100 according to a first aspect of the present invention, configured in a fully unfolded configuration. The agricultural machine comprises a support frame 2, which has a first side 4 and a second side 6. The support frame furthermore has a front part 8 and a rear part 10. Figure 1 also shows what is meant by the longitudinal direction X and the transverse direction Y. On the rear part 10 is arranged a tilting frame 12. The tilting frame comprises a first side 14 and a second side 16, and a front end 18 and a rear part 20. The tilting frame can turn in relation to the support frame about a first pivot 61. The support frame furthermore contains a pair of wheels 22, which basically have a common axle of rotation. The wheels 22 can be raised or lowered by hydraulic cylinders 24 in relation to the support frame 2.

Each side of the tilting frame has a first set of projections 30, consisting of two primary projections 30', 30". Each primary projection has a first end 32 and a second end 34. The first projection is rotationally hung at the first 14 or second side 16 of the tilting frame 12 via a second pivot 62. A second set of projections 40 comprising two primary projections 40', 40", each one containing a first end 42 and a second end 44, is connected to the second end 34 of the respective primary projection 30', 30" via a third pivot 63 and fastened to the first end 42 of the secondary projection. The second end 44 of the secondary projection is fastened to an injecting tool 50, 50', 50" via a fourth pivot 64. This fastening is in a position that corresponds to the approximate midpoint 55 of the transverse dimension of this injecting tool 50', 50".

Each injecting tool comprises a number of wheels 52, arranged in a series in an essentially transverse direction. Behind the series of wheels is arranged a number of furrowing blades 54, which are likewise arranged in a series. Behind the row of furrowing blades is arranged a number of injecting elements 56 for the injecting of manure.

Fig. 1 also shows that the support frame 2 comprises a pair of stabilizer rods 80, each of which has a flexible coupling 84. Furthermore, it is seen that the support frame has a pair of slanting braces 82, which contribute to further stiffness of the agricultural machine.

Finally, Figure 1 shows that the transverse dimension of each injecting tool 50', 50" is L, corresponding to the transverse dimension of each primary projection 30', 30", and that the transverse dimension of each secondary projection 40', 40" corresponds to around ½ L.

During use, the agricultural machine is pulled behind a vehicle (not shown) on a field. Manure is pumped from a manure tank to means for distributing manure to the individual injecting elements (not shown).

It is preferable for the agricultural machine 100 to have a motor 60 for operation of among other the wheels on the injecting tool, the means for automatic unfolding and folding of the agricultural machine, and for the agricultural machine 100 to have means 70 (not shown) for mechanical coupling between wheels and furrowing blades, which reduces the resistance exerted by the ground and lets the furrowing blades more easily cut a furrow in the ground.

The manure discharged from the injecting elements ends up in the furrows cut by the furrowing blades.

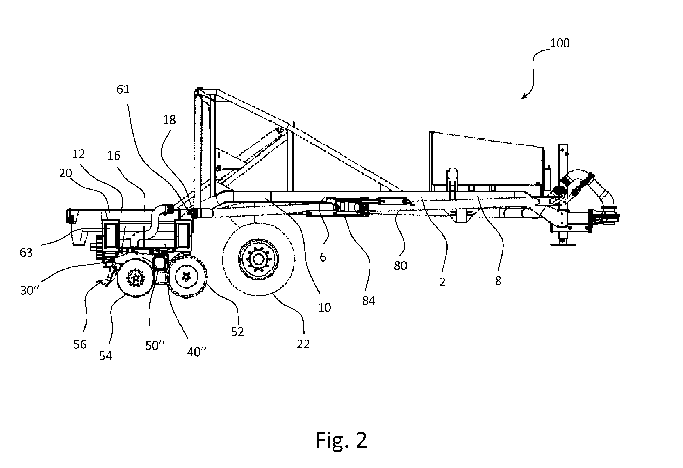

Fig. 2 shows a second embodiment of the agricultural machine according to the first aspect of the invention, seen from the side 6. Fig. 2 shows the support frame 2 with its front part 8 and its rear part 10. The support frame is mounted with wheels 22. The support frame 2 contains a tilting frame 12, the other side 16 of the tilting frame being shown. The tilting frame is rotationally suspended at the first pivot 61, which is fastened to the support frame 2. The tilting frame, as can be seen, has a front end 18 and a rear part 20. The tilting frame is fastened to a primary projection 30" via a pivot 62 (not shown). The primary projection 30" is fastened via the pivot 63 to a secondary projection 40", which in turn is fastened via the pivot 64 (not shown) to an injecting tool 50".

The injecting tool 50" comprises a set of wheels 52 arranged in a series, behind which is a number of furrowing blades 54, likewise arranged in a series. Behind the furrowing blades is arranged a row of injecting elements in the form of injecting pipes 56.

Fig 2 furthermore shows the stabilizer rod 80, having a flexible coupling 84.

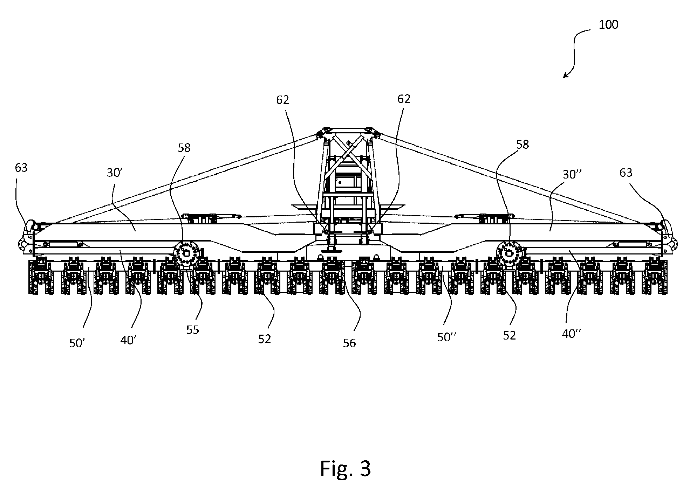

Fig. 3 shows a rear view of the agricultural machine of Fig. 2 configured in a semi-unfolded configuration. One sees a set of primary projections 30', 30" suspended from the second pivot 62. At the other end of each primary projection there is suspended via the third pivot 63 a secondary projection 40', 40", and this secondary projection is rotationally fastened at its other end to an injecting tool 50', 50". The injecting tool 50', 50" comprises means 58 of distributing manure into injecting elements 56. The injecting tool 50', 50" furthermore comprises wheels 52 and furrowing blades 54 (not shown).

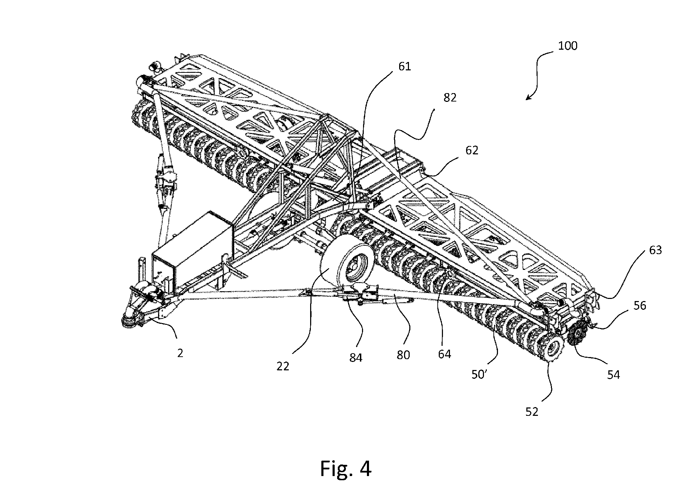

Fig. 4 shows a perspective view of the agricultural machine of Fig. 1, likewise configured in a semi-unfolded configuration. In this configuration each injecting tool 50', 50" is folded in underneath the corresponding secondary projection 40', 40" and this secondary projection is in turn folded in underneath the primary projection 30', 30". Fig. 4 shows the positions of the four pivots 61, 62, 63 and 64. The injecting tool 50' comprises wheels 52, furrowing blades 54 and injecting elements 56. Slanting braces 82 help stabilize the agricultural machine.

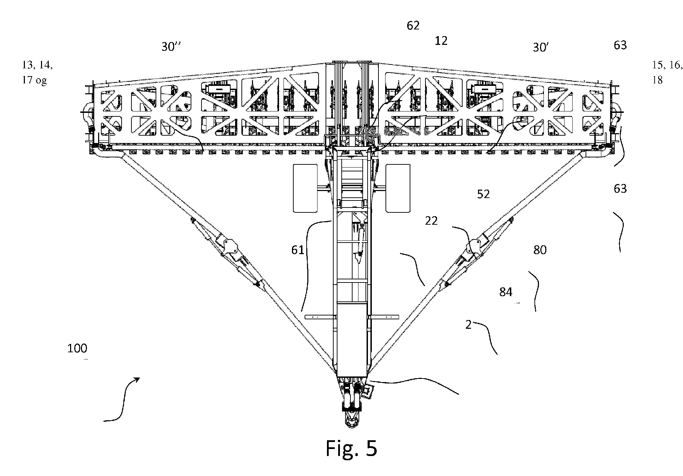

Fig. 5 shows the agricultural machine 100 of Fig. 3 configured in a semi-unfolded configuration and seen from above. One sees the support frame 2, which comprises wheels 22 and the tilting frame 12, which is suspended from the pivot 61. On the tilting frame 12 is furthermore mounted a pair of primary projections 30', 30" and underneath these are the secondary projections 40', 40" and injection tool 50', 50" in this semi-unfolded configuration.

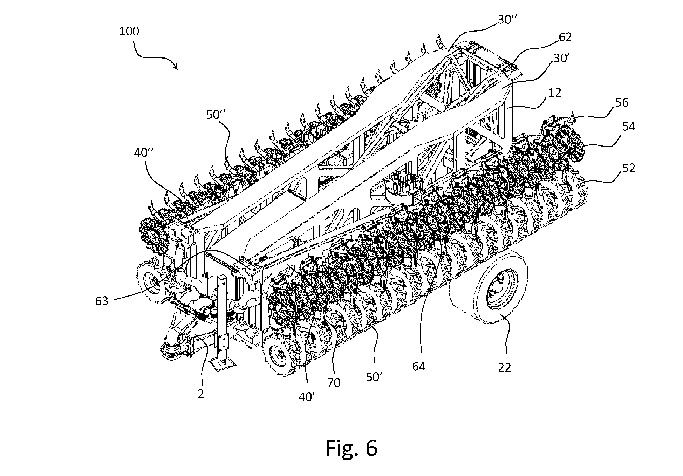

Fig. 6 shows a perspective view of the agricultural machine 100 of Fig. 3 configured in a transport configuration. Fig. 6 shows the frame 2 with wheels 22, containing the tilting frame 12, which carries via pivot 62 the primary projections 30', 30". These primary projections 30', 30" are arranged so as to be oriented in a longitudinal direction. The primary projections carry, via pivot 63, secondary projections 40', 40". These secondary projections 40', 40" also carry via pivot 64 injecting tools 50', 50". Likewise, both the secondary projections 40', 40 and the injecting tools 50', 50" are arranged so as to be oriented in a longitudinal direction. In this way, the agricultural machine can be easily and safely transported on the public roads.

### Reference numbers for the figures

- 2: - support frame
- 4: - first side of support frame
- 6: - second side of support frame
- 8: - front part of support frame
- 10: - rear part of support frame
- 12: - tilting frame
- 14: - first side of tilting frame
- 16: - second side of tilting frame
- 18: - front end of tilting frame
- 20: - rear part of tilting frame
- 22: - wheel on support frame
- 24: - hydraulic cylinder for raising/lowering of driving wheel
- 30: - first set of projections
- 30',30": - primary projection of first set of projections
- 32: - first end of primary projection
- 34: - second end of primary projection
- 40: - second set of projections
- 40',40": - secondary projection of first set of projections
- 42: - first end of secondary projection
- 44: - second end of secondary projection
- 50: - set of injecting tools
- 50',50": - injecting tools
- 52: - wheels on injecting tool
- 54: - furrowing blades
- 55: - approximate midpoint of injecting tool
- 56: - injecting elements in form of injecting pipes
- 58: - means of distributing manure in the injecting elements
- 60: - motor to operate wheels on the injecting tool
- 61: - first pivot
- 62: - second pivot
- 63: - third pivot
- 64: - fourth pivot
- 70: - means for mechanical coupling between wheel and blade
- 80: - stabilizer rod
- 82: - slanting brace
- 84: - flexible coupling

## Claims

1. Agricultural machine (100) for delivery and injecting of manure, where the agricultural machine in an unfolded configuration in the orientation intended for use in a working situation comprises:
- a support frame (2), where the support frame comprises a first side (4) and a second side (6); and where the support frame comprises a front part (8) and a rear part (10), the frame thereby defining a longitudinal direction X between the front part and the rear part; and a transverse direction Y, which is oriented perpendicular to the longitudinal direction;
- a tilting frame (12), which comprises a first side (14), a second side (16), a front end (18) and a rear part (20);
- a first set of projections (30) comprising two primary projections (30', 30"); where each primary projection extends from a first end (32) to a second end (34) of the primary projection in a transverse direction from each side (14, 16) of the tilting frame;
- a second set of projections (40) comprising two secondary projections (40', 40"), each secondary projection extending from a first end (42) to a second end (44) of the secondary projection in a transverse direction from the second end (34) of each primary projection;
- a set of injecting tools (50) comprising two injecting tools (50', 50"), each injecting tool having a longest dimension in a transverse direction;
**characterized in that**
the tilting frame (12) at its front end (18) is rotationally mounted in a first pivot (61) at the rear part (10) of the support frame, while the tilting frame can turn about an essentially horizontal axis, which is essentially parallel to the transverse direction;
where each primary projection (30', 30") at its first end (32) is rotationally mounted in a second pivot (62) arranged on either side of the tilting frame (12), each primary projection being able to turn about an essentially horizontal axis, which is essentially parallel to the longitudinal direction of the support frame;
where each secondary projection (40', 40") at its first end is rotationally mounted in a third pivot (63) arranged on each primary projection at the second end (34) of this primary projection, while each secondary projection can turn about an essentially horizontal axis, which is essentially parallel to the longitudinal direction of the support frame;
where each injecting tool (50', 50") is rotationally mounted in a fourth pivot (64) at the second end (44) of a secondary projection, each injecting tool being able to turn about an essentially horizontal axis, which is essentially parallel to the longitudinal direction of the support frame.

2. Agricultural machine according to claim 1, where each injecting tool comprises:
- a number of wheels (52) arranged in a series, the wheels having essentially a common axis of rotation, and this axis of rotation is oriented in a transverse direction;
- a number of rounded furrowing blades (54) arranged in a series, the furrowing blades having essentially a common axis of rotation, and this axis of rotation is oriented in a transverse direction, and each furrowing blade comprises a rounded plate comprising at least at its periphery a curved trajectory, such that the series of furrowing blades seen in relation to a forward direction of travel is arranged behind the series of wheels (52);
- a number of injecting elements (56) arranged in a series and designed to introduce manure into a furrow in the ground; the series of injecting elements being arranged in a transverse direction and the series of injecting elements, seen in relation to a forward direction of travel, is arranged behind the series of furrowing blades;
- means (58) of distributing manure from a central supply line to each injecting element.

3. Agricultural machine according to any one of claims 1-2, where the wheels in each injecting tool comprise means (70) of mechanical coupling to the rear furrowing blades such that the rotational movement of a wheel entrains a corresponding rotational movement of a rear furrowing blade such that a given rotational speed of the wheel entrains a lower rotational speed for the rear furrowing blade.

4. Agricultural machine according to any one of claims 1-3, where the support frame comprises two or more wheels (22), at least two wheels having essentially a common axis of rotation, the axis of rotation being oriented in a transverse direction.

5. Agricultural machine according to any one of claims 1-4, where each injecting tool (50',50") is rotationally mounted at the second end (44) of the corresponding secondary projection in a position (55) corresponding to the approximate midpoint of the transverse dimension of this injecting tool.

6. Agricultural machine according to any one of claims 1-5, where the mutual dimensions of each primary projection (30', 30"), each secondary projection (40', 40"), and each injecting tool (50', 50") are respectively defined such that if the dimension of each injecting tool (50', 50") in a transverse direction has the magnitude L, then the dimension of each primary projection (30', 30") in a transverse direction has essentially the magnitude L; and the dimension of each secondary projection (40', 40") in a transverse direction has essentially the magnitude ½ L.

7. Agricultural machine according to any one of claims 1-6, where the agricultural machine is adapted to be placed in a semi-unfolded configuration, where:
- each secondary projection (40', 40") is arranged beneath the corresponding primary projection (30', 30") such that each secondary projection is essentially oriented parallel to this corresponding primary projection, and each secondary projection is swiveled in beneath the corresponding primary projection by rotating about the third pivot (63); and where
- each injecting tool (50', 50") is arranged beneath the corresponding secondary projection (40', 40") such that each injecting tool is essentially oriented parallel to this corresponding secondary projection, and each injecting tool is swiveled in beneath the corresponding secondary projection by rotating about the fourth pivot (64).

8. Agricultural machine according to any one of claims 1-7, the agricultural machine is adapted to be brought into a transport configuration, where:
- the tilting frame (12) is vertically oriented; and where
- each primary projection (30', 30") is essentially oriented in parallel with the corresponding secondary projection (40', 40") and with the corresponding injecting tool (50', 50"), and each secondary projection (40', 40") is thus arranged overlapping between the corresponding primary projection (30', 30") and the corresponding injecting tool (50', 50"); and where
- each primary projection (30', 30") is oriented essentially in a longitudinal direction.

9. Agricultural machine according to any one of claims 1-8, where the agricultural machine comprises means (90) for automatically:
- rotating the tilting frame (12) about the first pivot (61); and/or
- rotating one or two primary projections (30', 30") about the second pivot (62), and/or
- rotating one or two secondary projections (40', 40") about the third pivot (63), and/or
- rotating one or two injecting tools (50', 50") about the fourth pivot (64).

10. Agricultural machine according to any one of the preceding claims comprising means of raising and lowering the wheels (22) in relation to the support frame (2).

11. Agricultural machine according to claim 10, where the means of raising and lowering the wheels (22) comprise hydraulic or electric motors.

12. Use of an agricultural machine (100) according to any one of claims 1 - 11 for an agricultural purpose.

13. Method for injecting of manure, comprising the following steps:
i) providing of an agricultural machine (100) according to any one of claims 1 to 12, which is placed in an unfolded configuration;
ii) defining of a driving track on an area of ground where one wishes to inject manure, the driving track having an extent in a transverse direction, as compared to the driving direction, corresponding to the combined dimension, in a transverse direction, of the two injecting tools;
iii) driving of the agricultural machine (100) provided in step i) across the driving track defined in step ii) while at the same time injecting manure;
iv) changing of the configuration of the agricultural machine (100) to a semi-unfolded configuration, such as is defined in claim 14;
v) driving the agricultural machine (100) in the configuration defined in step iv) across the driving track defined in step ii) while injecting manure at the same time.

14. Method according to claim 13, where the agricultural machine prior to step iii) is brought from a transport configuration to an unfolded configuration by:
a) total or partial unfolding of each of the primary projections (30', 30");
b) raising of the driving wheels (22) so one or more of the wheels (52) on the injecting tools (50', 50") rests on the ground;
c) forward movement of the agricultural machine followed by backward movement, these movements forcing the secondary projection (40', 40"), the injecting tools (50', 50"), and possibly also the primary projection (30', 30") to be unfolded, if these are not already fully unfolded;
d) tilting of the tilting frame (12) down into a horizontally oriented position.

15. Method according to claim 13 and/or claim 14, where the agricultural machine after discharging the manure is brought into a transport configuration by:
a) tilting of the tilting frame (12) to a vertically oriented position.
b) forward movement of the agricultural machine followed by backward movement, these movements forcing the injecting tools (50', 50"), the primary projections (30', 30"), and the secondary projections (40', 40") to fold up fully or partly;
c) lowering of the driving wheels (22) so that one or more of the wheels (52) on the injecting tools (50', 50") are lifted from the ground;
d) folding up of each of the primary projections (30', 30").
